# EUROPÄISCHE PATENTANMELDUNG

(11) **EP 2 842 719 A2**
(43) Veröffentlichungstag der Anmeldung: **04.03.2015**
(21) Anmeldenummer: 14176905.9
(22) Anmeldetag: 14.07.2014
(51) Int. Cl.: B29C 47/88, B29C 47/92, B29C 47/90

(54) **Verfahren und Vorrichtung zur Abkühlung von Kunststoffprofilen**

(30) Priorität: 22.07.2013 DE 102013107809
(71) Anmelder: egeplast international GmbH, 48268 Greven (DE)
(72) Erfinder: Böhm, Roland, 48341 Altenberge (DE)
(74) Vertreter: Fritz, Edmund Lothar

(57) **Zusammenfassung**

Die vorliegende Erfindung betrifft ein Verfahren und eine Vorrichtung zur Abkühlung von Kunststoffprofilen, insbesondere Kunststoffrohren in einer Extrusionslinie, umfassend einen Extruder, mindestens ein Formgebungswerkzeug und eine Kalibrierung, wobei das extrudierte Kunststoffprofil zur Abkühlung nachfolgende Kühleinrichtungen (10) durchläuft, die wenigstens ein Kühlmedium enthalten, welches in den Kühleinrichtungen entgegen der Extrusionsrichtung der Extrusionslinie strömt. Erfindungsgemäß strömt das Kühlmedium in den Kühleinrichtungen (10) mit einer derart hohen Relativgeschwindigkeit zum Kunststoffprofil (9), dass sich eine turbulente Strömung an der Grenzschicht zum Kunststoffprofil einstellt. Durch die turbulente Strömung an der Grenzschicht wird eine bessere Wärmeübertragung erzielt als bei einer laminaren Grenzschicht. Der dadurch erzielte stetige Austausch mit dem Kühlmedium an der gesamten Oberfläche des abzukühlenden Profils führt zu einer wesentlich effektiveren Kühlung.

## Beschreibung

Die vorliegende Erfindung betrifft ein Verfahren zur Abkühlung von kontinuierlich hergestellten Profilerzeugnissen aus Kunststoff in einer Extrusionslinie, umfassend einen Extruder und mindestens ein Formgebungswerkzeug, wobei das extrudierte Kunststoffprofil zur Abkühlung nachfolgende Kühleinrichtungen durchläuft, die wenigstens ein Kühlmedium enthalten, welches in den Kühleinrichtungen entgegen der Extrusionsrichtung der Extrusionslinie strömt. Kontinuierlich hergestellte Profilerzeugnisse umfassen im Sinne der vorliegenden Erfindung insbesondere Kunststoffrohre. Die Erfindung ist aber nicht ausschließlich auf Kunststoffrohre beschränkt, sondern die genannten Profilerzeugnisse können im Prinzip einen beliebigen Querschnitt aufweisen.

Die DE 196 22 419 C2 beschreibt ein Verfahren zum Kühlen von Kunststoffprofilen und eine Kalibriervorrichtung für eine Anlage zum Extrudieren von Kunststoffprofilen. Das Profil wird hier beim Förden durch ein Vollbad mit einer Kühlflüssigkeit, in der es in eng an dem Profil anliegenden Führungen geführt wird, durch erzwungene Konvektion gekühlt. Dabei soll im Vollbad die Reynoldszahl der Konvektion unterhalb der kritischen Reynoldszahl gehalten werden, das heißt es wird eine ruhige laminare Strömung im Kühlbad angestrebt, wobei die laminare Strömungsgrenzschicht am Profil durch die Führungen der Kalibriervorrichtung gestört wird und sich vor den Führungen ein Rückstau bildet. Durch diesen Rückstau soll Kühlflüssigkeit umgelenkt und erwärmte Kühlflüssigkeit in der Grenzschicht am Profil abgestreift werden, so dass frische kalte Kühlflüssigkeit an die Oberfläche des abzukühlenden Profils herangeführt werden kann. Diese bekannte Lösung kommt nur für Kühlbäder in Betracht, in denen eine Kalibrierung erfolgt, das heißt, in denen ein Kunststoffprofil, beispielsweise ein Kunststoffrohr, durch geometrisch definierte Durchtrittsöffnungen, welche die Kalibrierführungen darstellen, vorbei geführt wird, da andernfalls keine formgebende Kalibrierung erfolgen würde.

Aus der DE 10 2007 050 949 A1 ist ein Verfahren zur Energienutzung beim Kühlen von Extrusionsprofilen bekannt, bei dem das Kühlmedium zur Kühlung entgegen der Extrusions-richtung die Extrusionslinie durchläuft. Das Kühlmedium wird hier entgegen der Extrusionsrichtung zunächst in die vom Werkzeug entfernteste Kühlstation eingebracht, dann der entgegen der Extrusionsrichtung gesehen nächsten Kühlstation zugeführt und so weiter, bis die Kühlstation direkt hinter dem Werkzeug durchlaufen wurde. Erst dann gelangt das Kühlmedium in den Rücklauf und wird wieder einer Kältemaschine zugeführt. Der Volumenstrom des Kühlmediums durch die Kühlstationen ist hier verhältnismäßig langsam, so dass von einer laminaren Strömung des Kühlmediums in den Kühlbändern auszugehen ist.

Grundsätzlich sind aus dem Stand der Technik zwei Typen von Kühlvorrichtungen für Kunststoffprofile bekannt, nämlich zum einen solche, bei denen in einem Sprühbad gekühlt wird, in dem mittels Sprühdüsen Wasserstrahlen auf das Profil gerichtet werden. In dem Sprühbad kann gleichzeitig durch eine Evakuierung der geschlossenen Wanne das herzustellende Profil formgebend kalibriert werden, durch den vorherrschenden Unterdruck wird das Profil an die Führungen der Kalibriervorrichtung gesaugt. Anstelle eines Sprühbads kann auch ein Vollbad verwendet werden, wobei es allerdings schwieriger ist, in der Wanne eines solchen Vollbades einen Unterdruck zu erzeugen. In der EP 0 659 537 A2 ist eine Vorrichtung zur Abkühlung von Kunststoffprofilen in einem Vollbad beschrieben, bei der der Unterdruck in der Wanne mittels einer selbst ansaugenden Wasserpumpe erzeugt wird. Es sind Wände als Führungen zur Kalibrierung des Profils vorgesehen, die Öffnungen zur Erzeugung einer turbulenten Strömung des Kühlwassers aufweisen. Diese Öffnungen sind entweder als Schlitze im seitlichen Bereich oder als runde Öffnungen ausgebildet, wobei die Öffnungen in der Wand für den Wasserdurchtritt in beiden Fällen vergleichsweise klein sind.

Die Aufgabe der Erfindung besteht darin, ein Verfahren zur Abkühlung von Kunststoffprofilen mit den Merkmalen der eingangs genannten Gattung zur Verfügung zu stellen, welches eine höhere Wärmeabfuhr auf einer vorgegebenen Kühlstrecke und somit eine effektivere Kühlung erzielt.

Die Lösung dieser Aufgabe liefert ein Verfahren zur Abkühlung von Kunststoffprofilen der eingangs genannten Gattung mit den kennzeichnenden Merkmalen des Hauptanspruchs.

Erfindungsgemäß ist vorgesehen, dass das Kühlmedium in den Kühleinrichtungen mit einer derart hohen Relativgeschwindigkeit zum Kunststoffprofil strömt, dass sich eine turbulente Strömung an der Grenzschicht zum Kunststoffprofil einstellt. Der Erfindung liegt die Erkenntnis zu Grunde, dass die turbulente Strömung an der Grenzschicht eine bessere Wärmeübertragung hat als eine laminare Grenzschicht. Anders als im Stand der Technik strömt das Kühlmedium im Gegenstrom zur Förderrichtung des Kunststoffprofils durch einen Spalt rings um das Kunststoffprofil, welcher das Kunststoffprofil vollständig an seinem Umfang umgibt. Es erfolgt also eine Wärmeabfuhr in der turbulenten Grenzschicht an der gesamten Oberfläche des abzukühlenden Profils. Im Stand der Technik gemäß EP 0 659 537 A2 verhindern hingegen die der Kalibrierung dienenden Führungen eine solche Strömung des als Kühlmedium dienenden Fluids am Umfang des Kunststoffprofils. Das Kühlbad ist durch senkrecht zur Förderrichtung des Kunststoffprofils verlaufende Wände in einzelne Abschnitte unterteilt. Das Kühlmedium kann hier nur durch Öffnungen in diesen Wänden von einem Abschnitt in den nächsten strömen, wobei diese Öffnungen verhältnismäßig klein sind, verglichen mit dem gesamten Querschnitt des Kühlbads und wobei diese Öffnungen auch nicht in unmittelbarer Nähe zum Kunststoffprofil liegen. Folglich liegt im Bereich der Grenzschicht des Kühlmediums am Kunststoffprofil nur eine vergleichsweise geringe Relativgeschwindigkeit zwischen Kühlmedium und Kunststoffprofil vor.

Demgegenüber ergibt sich bei der erfindungsgemäßen Lösung eine wesentlich gesteigerte Wärmeabfuhr auf identischer Kühlstrecke gegenüber heutigen Ausführungen bei Verwendung von beispielsweise Wasser als Kühlmedium. Daraus resultiert eine erhebliche Verkürzung der effektiven Kühllänge (beispielsweise ca. 30-60%, dimensionsabhängig) gegenüber den Kühleinrichtungen aus dem Stand der Technik. Die Erfindung schafft die Möglichkeit zur Erhöhung des maximalen Materialdurchsatzes bei bestehenden Linienlängen. Die bei herkömmlichen Lösungen laminare, und damit stetig wärmer werdende, dicke Grenzschicht wird über Gegenstromgeschwindigkeit in eine vorteilhafte turbulente Grenzschicht gewandelt.

Gemäß einer besonders bevorzugten Weiterbildung der Erfindung ist das Kunststoffprofil ein Kunststoffrohr mit kreiszylindrischem Querschnitt, die Kühleinrichtung ist ein Kühlbecken mit rundem oder eckigem Querschnitt und der Spalt erstreckt sich im wesentlichen über die Querschnittsfläche zwischen dem Kunststoffrohr und den Längswänden des Kühlbeckens. Auf diese Weise kann ein maximaler Massestrom an Kühlmedium durch das Kühlbecken gefördert werden.

Im Fall der Extrusion von Kunststoffrohren durch ein Kühlbecken mit Zylindergeometrie ergibt sich beispielsweise ein konzentrischer Ringspalt zwischen dem extrudierten Rohr und der Beckenwandung. Die bevorzugten Strömungsverhältnisse bei dieser beispielhaften Variante der Erfindung, bei der der Spalt ein Ringspalt ist und das Kunststoffprofil ein Kunststoffrohr ist, können definiert werden durch die Annahme, dass in einem solchen Fall vorzugsweise das Verhältnis k = D _{Kühlbecken}/d _{Kunststoffprofil} zwischen etwa 1,2 und etwa 5 beträgt. Ist das genannte Verhältnis k klein, stellt sich bei einem vorgegebenen Massestrom die höchste Strömungsgeschwindigkeit ein.

Das Kühlmedium kann im Rahmen der vorliegenden Erfindung auch ein gasförmiges Fluid sein. Bevorzugt wird Wasser als Kühlmedium verwendet, wobei das Kunststoffprofil insbesondere durch ein Vollbad des Kühlmediums im Gegenstrom gefördert wird.

Die Gegenstromgeschwindigkeit zwischen dem extrudierten Kunststoffprofil und dem Kühlmedium kann insbesondere so geregelt werden, dass ein Umschlag von laminarer auf turbulente Strömung erfolgt.

Beispielsweise durch eine geodätische Höhe einer Wassersäule, die auf das zufließende Kühlmedium an der Eintrittsseite in das Kühlbecken wirkt, kann man einen konstanten Gegenstrom des Kühlmediums erzielen. Die zur Erzeugung einer turbulenten Strömung in der Grenzschicht am Kunststoffprofil notwendige hohe Strömungsgeschwindigkeit des Kühlmediums kann man beispielsweise dadurch erzielen, dass man dieses aus einem oberhalb des Kühlbeckens gelegenen Zwischenspeicher unter Ausnutzung des hydrostatischen Drucks der Wassersäule dem Kühlbecken in dessen Endbereich über eine Zuführleitung zuführt. Das Kühlmedium wird also an der Eintrittsseite (die demjenigen Ende des Kühlbeckens entspricht, an dem das Kunststoffprofil das Kühlbecken verlässt) unter Druck in das Kühlbecken eingespeist. Gegebenenfalls kann man einen erzeugten Überdruck beispielsweise über Unterdruckpumpen im Kühlbecken kompensieren, sofern dies verfahrenstechnisch erforderlich ist.

Gemäß einer bevorzugten Weiterbildung der vorliegenden Erfindung kann beispielsweise in der Zuführleitung im Strömungsweg zwischen dem Zwischenspeicher und dem Kühlbecken eine regelbare Pumpe angeordnet sein, mittels derer man gegebenenfalls eine Durchflusserhöhung erzielen kann, wobei zum Beispiel eine Bypassleitung vorgesehen sein kann, durch die das Kühlmittel strömen kann, wenn die Pumpe nicht benutzt wird.

Den Wasserdurchsatz im Kühlbecken kann man auch beispielsweise über Durchmesser und Form eines Auslassrohres an der Austrittsseite des Kühlbeckens regeln und verändern. Beispielsweise kann man ein im Bereich des Auslasses befindliches Ventil zum Regeln des volumetrischen Durchsatzes verwenden.

Wassereinlass bzw. -auslass können in ihrer Position und Ausrichtung variieren, so dass beispielsweise der Winkel des eintretenden Kühlmediums von senkrecht zur Extrusionsachse bis zu achsparallel zur Extrusionsachse variiert werden kann.

Gemäß einer bevorzugten Weiterbildung der erfindungsgemäßen Aufgabenlösung kann das an der Austrittsseite aus dem Kühlbecken ausströmende Kühlmedium in einem Sammelbehälter gesammelt und von diesem aus auf das Niveau des Zwischenspeichers gepumpt werden, und bevor es in den Zwischenspeicher gelangt in einer Thermostateinrichtung oder dergleichen auf eine vorgegebene Temperatur gebracht werden.

Gemäß einer bevorzugten Weiterbildung der Erfindung kann das Kühlmedium schwimmergeregelt dem Zwischenspeicher zugeführt und auf einem gleichbleibenden Höhenniveau gehalten werden. Das heißt es wird beispielsweise ein Schwimmer dem Zwischenspeicher zugeordnet und im Strömungsweg in der Zuleitung zum Zwischenspeicher zwischen Thermostateinrichtung und Zwischenspeicher angeordnet.

Gemäß einer bevorzugten Weiterbildung der Erfindung kann beispielsweise das Kunststoffprofil über auf dessen Oberseite angeordnete Stützrollen in dem Kühlbad in Extrusionsrichtung gefördert werden. Bei herkömmlichen Anlagen befinden sich die Stützrollen in der Regel auf der Unterseite des Kunststoffprofils. Die erfindungsgemäße Lösung hat den Vorteil, dass die Stützrollen von der Beckenoberseite her aus dem Kühlbecken entnommen werden können. Außerdem verhindern die Stützrollen das Aufschwimmen des Kunststoffrohrs im Kühlbad.

Eine bevorzugte Weiterbildung der Erfindung sieht vor, dass im Kühlbecken vorzugsweise in ihrem Winkel ausrichtbare Turbulatoren angeordnet sind, die einen spiralförmigen Fluss des Kühlmediums durch das Kühlbecken erzeugen. Dadurch wird ein längerer Fließweg des Kühlmediums durch das Kühlbad erzeugt und somit steigt bei gleichbleibendem Massestrom die vektorielle Strömungsgeschwindigkeit des Kühlmediums. Man kann auch beispielsweise über Diffusoren im Bereich des Wasserauslasses eine Erhöhung des Volumenstromes erzielen.

Zur Steigerung einer Drallströmung kann man beispielsweise zur Aufrechterhaltung/Kompensation der Reibung eine spiralförmige Leitung innerhalb des Kühlbeckens mit entsprechend ausgerichteten Bohrungen zur Fluidausströmung verwenden.

Gemäß einer bevorzugten Weiterbildung der Erfindung können an der Einlaufseite und/oder an der Auslaufseite jeweils Auffangkammern mit Überlauf vorgesehen sein. Das dort aufgefangene Wasser kann bei Übersteigen einer definierten Füllhöhe über den Überlauf abgeleitet werden. Der Wasserstand im Kühlbecken kann gemäß einer möglichen Variante des Verfahrens regelbar sein.

Gegenstand der vorliegenden Erfindung ist weiterhin eine Extrusionslinie, insbesondere zur Verwendung in einem Verfahren der zuvor beschriebenen Art, umfassend einen Extruder und mindestens ein Formgebungswerkzeug, bei der das extrudierte Kunststoffprofil zur Abkühlung nachfolgende Kühleinrichtungen durchläuft, mit wenigstens einem Kühlbecken, welches ein Kühlmedium enthält, welches in dem Kühlbecken entgegen der Extrusionsrichtung der Extrusionslinie strömt, wobei die Extrusionslinie erfindungsgemäß wenigstens einen oberhalb des Kühlbeckens gelegenen Zwischenspeicher umfasst, aus dem unter Ausnutzung des hydrostatischen Drucks der Wassersäule dem Kühlbecken in dessen Endbereich Kühlmedium über eine Zuführleitung zugeführt wird und wenigstens einen Sammelbehälter, in dem an der Austrittsseite aus dem Kühlbecken ausströmendes Kühlmedium gesammelt und von diesem aus auf das Niveau des Zwischenspeichers gepumpt wird sowie wenigstens eine im Strömungsweg vor dem Zwischenspeicher angeordnete Thermostateinrichtung oder dergleichen, in der das Kühlmedium auf eine vorgegebene Temperatur gebracht wird, bevor es in den Zwischenspeicher gelangt.

Da man durch die Anwendung der erfindungsgemäßen Lösung eine insgesamt kürzere Kühlstrecke benötigt, verringern sich die Anschaffungs- und Instandhaltungskosten für die Extrusionslinie. Ebenso wird der Ausschuss verringert sowie die Linienanfahrprozesszeit. Der Platzbedarf für die Kühlstrecke wird reduziert.

Die zuvor im Zusammenhang mit dem erfindungsgemäßen Verfahren beschriebenen bevorzugten Vorrichtungsmerkmale der Extrusionslinie sind ebenfalls Gegenstand der vorliegenden Erfindung.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte Darstellung eines Teils einer Extrusionslinie mit Kühleinrichtungen für das Kunststoffprofil gemäß einer ersten möglichen Ausführungsvariante der vorliegenden Erfindung;
Figur 2 eine weitere schematisch vereinfachte Darstellung eines Teils einer Extrusionslinie mit Kühleinrichtungen für das Kunststoffprofil gemäß einer zweiten möglichen Ausführungsvariante der vorliegenden Erfindung;
Figur 3 eine Darstellung eines Längsschnitts durch ein beispielhaftes Kühlbecken gemäß der Erfindung;
Figur 4 eine Darstellung eines Querschnitts durch das Kühlbecken von Figur 3.

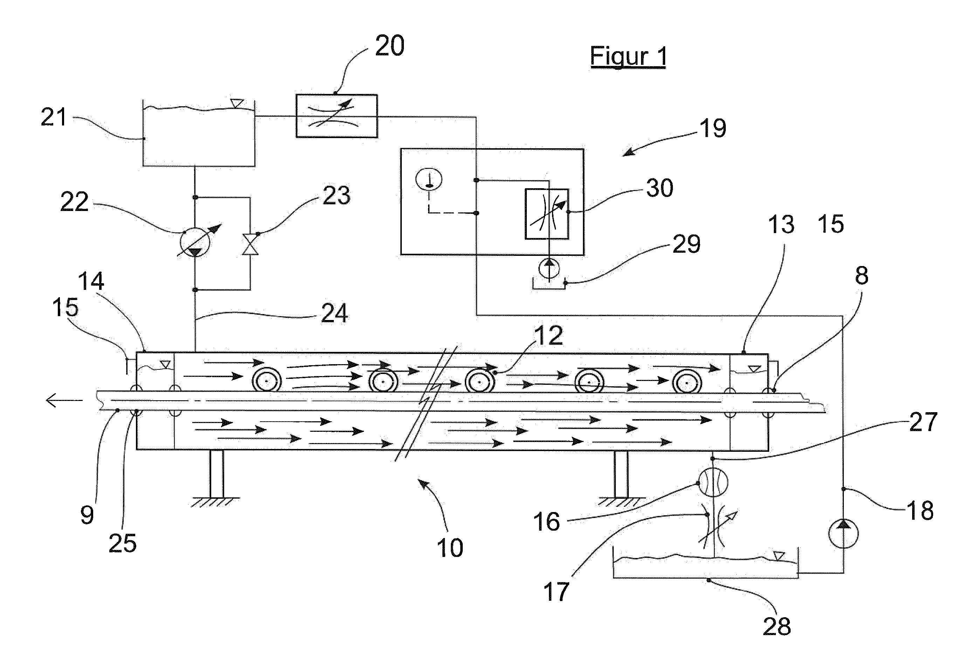

Zunächst wird auf Figur 1 Bezug genommen. In dieser schematischen Darstellung ist ein insgesamt mit dem Bezugszeichen 10 bezeichnetes Kühlbecken gezeigt, welches Teil einer Extrusionslinie darstellt, deren weitere Abschnitte hier nicht gezeigt sind, da sie einen herkömmlichen Aufbau aufweisen können. Das Kühlbecken 10 ist ein geschlossenes beispielsweise im Querschnitt rundes oder auch rechteckiges Behältnis mit jeweils axial ausgerichteter Einlauföffnung sowie Auslauföffnung für ein extrudiertes Rohr 9, wobei die Rohrextrusionsrichtung gemäß dem Pfeil in Figur 1 von rechts nach links ist. Das Rohr 9 tritt warm durch ein Dichtelement 8 in das Kühlbecken 10 ein und tritt an der Austrittsseite gekühlt durch ein weiteres Dichtelement 25 wieder aus dem Kühlbecken aus. Einlaufseitig ist dem eigentlichen Hauptbecken eine Auffangkammer 13 mit Überlauf 15 vorgeschaltet, die als Wasserschleuse dient. Ebenso ist auslaufseitig eine weitere Auffangkammer 14 mit Überlauf 15 vorgesehen, die sich in Extrusionsrichtung an das Hauptbecken der Kühlstrecke anschließt.

Es ist ein höher gelegener Zwischenspeicher 21 vorgesehen, aus dem beispielsweise Wasser als Kühlmedium über eine Zuführleitung 24 und einen in Figur 1 nicht sichtbaren beispielsweise radial an der Beckenoberseite im einen Endbereich des Kühlbeckens 10 angebrachten Stutzen in das Kühlbecken 10 einläuft. Durch den hydrostatischen Druck aus dem Zwischenspeicher 21 wird eine Strömungsgeschwindigkeit für das einlaufende Kühlwasser vorgegeben, wobei über eine Umwälzpumpe 22 in der Zuführleitung 24 der Zustrom geregelt werden kann. Wenn die Pumpe 22 nicht arbeitet, kann das Wasser über eine Bypassleitung 23 an der Pumpe 22 vorbei geführt und über die Zuführleitung 24 dem Kühlbecken 10 zugeführt werden. Das Wasser strömt in dem Kühlbecken 10 entsprechend den in Figur 1 eingezeichneten Pfeilen im Gegenstrom zur Vorschubrichtung des Rohrs 9 in der Extrusionslinie, wodurch eine höhere Relativgeschwindigkeit zwischen Rohr und Kühlwasser erreicht wird.

Das Kühlwasser strömt in Längsrichtung mit vergleichsweise hoher Strömungsgeschwindigkeit durch das Kühlbecken 10, so dass sich an der Grenzschicht zum Rohr eine turbulente Strömung ausbildet, die für eine hohe Wärmeabfuhr sorgt. Dem Kühlwasser steht im Prinzip der gesamte Raum (bei Zylindergeometrie des Kühlbeckens ein konzentrischer Ringraum) zwischen der Beckenwandung und dem Rohr als Strömungsquerschnitt zur Verfügung. Bei dieser Anordnung wird das Rohr 9 von dem rasch strömenden Kühlwasser an seinem gesamten Umfang umspült.

Im Kühlbecken 10 können in Längsrichtung mit Abstand zueinander auf der Oberseite des Rohrs 9 eine Anzahl von Stützrollen 12 angeordnet sein, die unterseitig eine Form haben können, die der Form des Rohrs 9 oder anderen Kunststoffprofils angepasst ist. Da sich die Rollen um ihre Achse drehen, wird eine verringerte Reibung zum Kunststoffprofil erzielt. Derartige Stützrollen sind an sich bekannt, befinden sich aber bei herkömmlichen Extrusionslinien an der Unterseite des Rohrs. Hier sind die Stützrollen 12 hingegen oberseitig angeordnet, so dass über die Stützrollen 12 verhindert werden kann, dass das Rohr im Kühlbecken aufschwimmt. Außerdem besteht bei dieser Anordnung die Möglichkeit, bei einer Wartung die Stützrollen 12 zur Oberseite des Kühlbeckens 10 hin zu entnehmen.

An der Kühlmittelaustrittsseite am anderen Ende des Kühlbeckens (in der Zeichnung rechts) kann das erwärmte Kühlwasser beispielsweise über einen unten am Kühlbecken befindlichen Stutzen 27 aus dem Kühlbecken 10 auslaufen und gelangt über ein Drosselventil 17 in einen Sammelbehälter 28. In dieser Leitung kann zwischen Kühlbecken 10 und Sammelbehälter 28 ein Volumenstrommeßgerät 16 angeordnet sein, welches den Volumenstrom des auslaufenden Wassers misst. Von dem Sammelbehälter 28 aus wird das Kühlwasser dann über die Leitung 18 hoch gepumpt auf das Niveau des Zwischenspeichers 21. Dabei passiert es eine Thermostateinrichtung 19, in der es auf eine gewünschte niedrigere Temperatur abgekühlt werden kann. Dabei kann über eine Frischwasserzufuhr 29 und ein Ventil 30 gegebenenfalls Frischwasser zugeführt werden. Dem Zwischenspeicher 21 wird das Wasser geregelt über einen diesem vorgeschalteten Schwimmer 20 zugeführt, so dass sichergestellt werden kann, dass das Wasser im Zwischenspeicher 21 immer auf einem gleichbleibenden Höhenniveau gehalten wird.

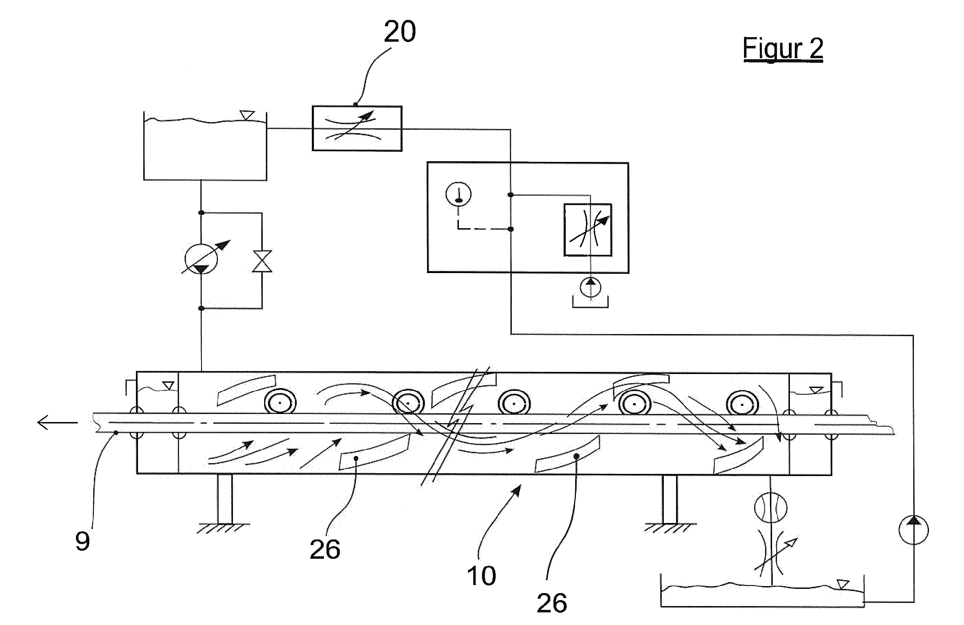

Figur 2 zeigt ebenfalls einen Ausschnitt einer Extrusionslinie mit einem Kühlbecken 10 gemäß einer Variante der vorliegenden Erfindung in einer ähnlichen schematischen Ansicht wie in Figur 1. Bei dieser Variante sind Turbulatoren 26 an verschiedenen Stellen im Kühlbecken 10 eingebaut, mittels derer ein bestimmter Strömungsweg des Kühlmediums durch das Kühlbecken erzwungen wird. Dadurch wird das Kühlmedium einen längeren Weg durch das Kühlbecken zurücklegen, da es nicht mehr axial strömt wie bei der zuvor anhand von Figur 1 beschriebenen Variante. Dies führt dann bei Einspeisen des gleichen Massestroms an Kühlwasser zu einer weiteren Erhöhung der Strömungsgeschwindigkeit im Kühlbecken, denn der Durchsatz an Kühlwasser durch das Kühlbecken bleibt gleich, aber der Weg, den dieses zurücklegen muss, wird länger.

In Figur 2 sieht man, dass die Turbulatoren 26 beispielsweise in den radial äußeren Bereichen des Kühlbeckens 10 angeordnet sind und zwar in Strömungsrichtung gesehen jeweils abwechselnd einmal links und einmal rechts des extrudierten Rohrs 9 und über den Rohrumfang zueinander versetzt, wobei die Turbulatoren in sich gekrümmte Prallflächen aufweisen. Grundsätzlich dienen in dem Ausführungsbeispiel die Turbulatoren 26 dazu, eine gedrallte Ausbildung der Fluidströmungsrichtung um die Extrusionsachse des herzustellenden Profils zu erzielen. Dadurch ergibt sich eine Strömung des Kühlwassers auf einem etwa spiralförmigen Weg um das Rohr herum durch das Kühlbecken. Somit ist der von dem Kühlwasser zurückgelegte Weg durch das Kühlbecken erheblich länger als bei einer axialen Strömung. Es sind aber auch andere konstruktive Lösungen möglich, um dies zu erreichen. Die Turbulatoren können ähnlich einem Turbinenrad im Querschnitt nebeneinander liegen, wobei die Form, Anzahl und Anordnung der Turbulatoren in weiten Bereichen variieren kann. Im Übrigen ist der Aufbau der Anlage und die Behandlung des Kühlmediums im Prinzip bei der Variante von Figur 2 genauso wie bei der oben unter Bezugnahme auf Figur 1 beschriebenen Variante und wird daher hier nicht noch einmal erläutert.

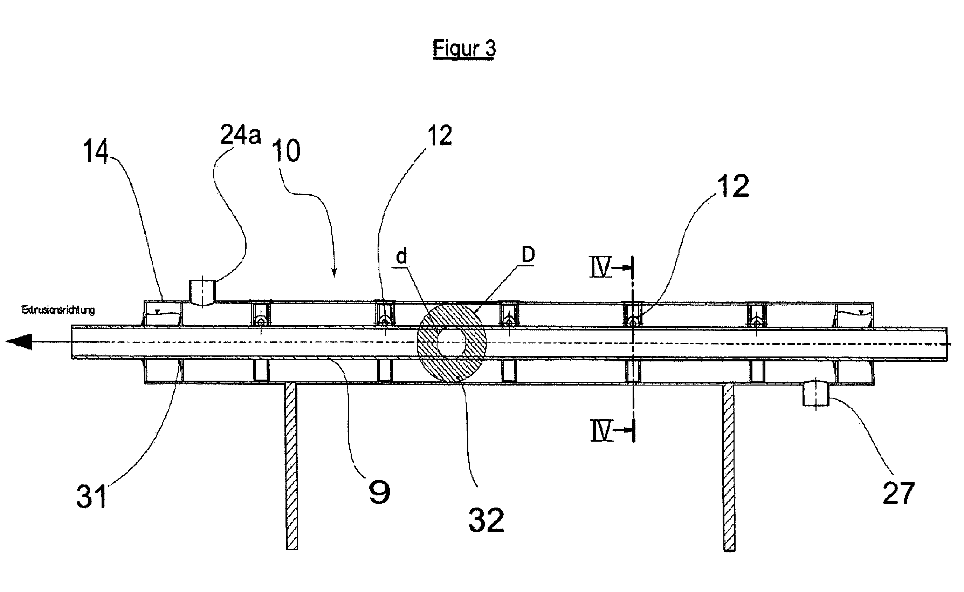

Nachfolgend wird auf die Figur 3 Bezug genommen, die noch einmal einen Längsschnitt durch ein beispielhaftes Kühlbecken 10 zeigt, welches bei dem erfindungsgemäßen Verfahren zum Einsatz kommt. Man sieht, dass zur Abdichtung zwischen dem Hauptbecken und der Auffangkammer 14 Dichtungen 31 beispielsweise in Form von Gummimanschetten vorgesehen sind, die am Umfang des extrudierten Rohrs 9 abdichten, wenn dieses vom Hauptbecken in die Auffangkammer 14 gelangt. Weiterhin ist in Figur 3 der Stutzen 24 a der Zuführleitung 24 erkennbar, über den das Wasser in das Hauptbecken gelangt ebenso wie der Stutzen 27 am anderen Ende des Hauptbeckens, über den das Wasser austritt und dann in den Sammelbehälter 18 gelangt. Man sieht in Figur 3 auch die Stützrollen 12, die von der Oberseite her aus dem Kühlbecken entnehmbar sind.

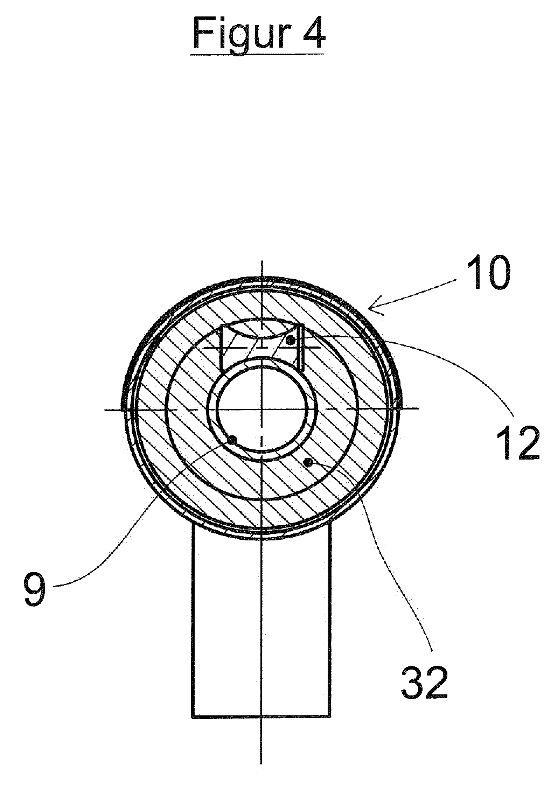

Figur 4 zeigt einen Querschnitt durch das in Figur 3 im Längsschnitt dargestellte Kühlbecken 10 entlang der Linie IV-IV von Figur 3. Man kann in Figur 4 auch die Form der Stützrolle 12 im Querschnitt erkennen, die an ihrem Umfang eine konvex gekrümmte Fläche aufweist, die dem Rohr zugewandt ist, so dass sich das Rohr in etwa formschlüssig an die Oberfläche der Stützrollen 12 anlegt. Von der Unterseite her kann das durch das Kühlbad geförderte Rohr 9 ebenfalls gestützt werden. Zwischen dem Kühlbecken 10, das wie man Figur 4 entnimmt eine Zylindergeometrie hat und dem durch das Kühlbecken in axialer Richtung geförderten Rohr ergibt sich ein konzentrischer Ringspalt 32, durch den das Kühlwasser strömt. Zur Verdeutlichung ist dieser Ringspalt 32, der dem für die Strömung des Kühlwassers verfügbaren freien Querschnitt entspricht, in der Längsschnittdarstellung von Figur 3 eingezeichnet. Aufgrund der hohen Relativgeschwindigkeit zwischen dem durch das Kühlbad geförderten Rohr 9 und dem im Gegenstrom durch das Kühlbecken strömenden Wasser, bildet sich an der Grenzschicht am Umfang des Rohrs 9 eine turbulente Strömung aus.

### Bezugszeichenliste

- 8: Dichtelement
- 9: Rohr
- 10: Kühlbecken
- 11: extrudiertes Kunststoffrohr
- 12: Stützrollen
- 13: Auffangkammer/Wasserschleuse
- 14: Auffangkammer/Wasserschleuse
- 15: Überlauf
- 16: Volumenstrommeßgerät
- 17: Drosselventil
- 18: Leitung
- 19: Thermostat
- 20: Schwimmer
- 21: Zwischenspeicher
- 22: Pumpe
- 23: Bypassleitung
- 24: Zuführleitung
- 24 a: Stutzen der Zuführleitung
- 25: Dichtelement
- 26: Turbulatoren
- 27: Stutzen
- 28: Sammelbehälter
- 29: Frischwasserzufuhr
- 30: Ventil
- 31: Dichtungen
- 32: Ringspalt

## Patentansprüche

1. Verfahren zur Abkühlung von kontinuierlich hergestellten Profilerzeugnissen aus Kunststoff in einer Extrusionslinie, umfassend einen Extruder und mindestens ein Formgebungswerkzeug, wobei das extrudierte Kunststoffprofil zur Abkühlung nachfolgende Kühleinrichtungen durchläuft, die wenigstens ein Kühlmedium enthalten, welches in den Kühleinrichtungen entgegen der Extrusionsrichtung der Extrusionslinie strömt, **dadurch gekennzeichnet, dass** man das Kühlmedium in den Kühleinrichtungen (10) mit einer derart hohen Relativgeschwindigkeit zum Kunststoffprofil (9) strömen lässt, dass sich eine turbulente Strömung an der Grenzschicht zum Kunststoffprofil einstellt.

2. Verfahren nach Anspruch 1, **dadurch gekennzeichnet, dass** das Kühlmedium durch einen Spalt (32) rings um das Kunststoffprofil (9) strömt, welcher das Kunststoffprofil vollständig an seinem Umfang umgibt.

3. Verfahren nach Anspruch 2, **dadurch gekennzeichnet, dass** das Kunststoffprofil (9) ein Kunststoffrohr mit kreiszylindrischem Querschnitt ist, die Kühleinrichtung ein Kühlbecken (10) mit rundem oder eckigem Querschnitt ist und dass sich der Spalt im wesentlichen über die Querschnittsfläche zwischen dem Kunststoffrohr und den Längswänden des Kühlbeckens erstreckt.

4. Verfahren nach Anspruch 2 oder 3, **dadurch gekennzeichnet, dass** der Spalt ein Ringspalt (32) ist und das Kunststoffprofil ein Kunststoffrohr (9) ist und das Verhältnis k = D _{Kühlbecken}/ d _{Kunststoffprofil} zwischen etwa 1,2 und etwa 5 beträgt.

5. Verfahren nach einem der Ansprüche 1 bis 4, **dadurch gekennzeichnet, dass** das Kühlmedium Wasser ist und das Kunststoffprofil (9) durch ein Vollbad des Kühlmediums im Gegenstrom gefördert wird.

6. Verfahren nach einem der Ansprüche 1 bis 5, **dadurch gekennzeichnet, dass** zur Erzeugung einer hohen Strömungsgeschwindigkeit des Kühlmediums dieses aus einem oberhalb des Kühlbeckens gelegenen Zwischenspeicher (21) unter Ausnutzung des hydrostatischen Drucks der Wassersäule dem Kühlbecken (10) in dessen Endbereich über eine Zuführleitung (24) zugeführt wird.

7. Verfahren nach Anspruch 6, **dadurch gekennzeichnet, dass** in der Zuführleitung (24) im Strömungsweg zwischen dem Zwischenspeicher (21) und dem Kühlbecken (10) eine regelbare Pumpe (22) angeordnet ist.

8. Verfahren nach einem der Ansprüche 6 oder 7, **dadurch gekennzeichnet, dass** das an der Austrittsseite aus dem Kühlbecken (10) ausströmende Kühlmedium in einem Sammelbehälter (28) gesammelt von diesem aus auf das Niveau des Zwischenspeichers (21) gepumpt wird und bevor es in den Zwischenspeicher gelangt in einer Thermostateinrichtung (19) oder dergleichen auf eine vorgegebene Temperatur gebracht wird.

9. Verfahren nach einem der Ansprüche 6 bis 8, **dadurch gekennzeichnet, dass** das Kühlmedium schwimmergeregelt dem Zwischenspeicher (21) zugeführt und auf einem gleichbleibenden Höhenniveau gehalten wird.

10. Verfahren nach einem der Ansprüche 1 bis 9, **dadurch gekennzeichnet, dass** das _{Kunststoffprofil} (9) über auf dessen Oberseite angeordnete Stützrollen (12) in dem Kühlbad (10) in Extrusionsrichtung gefördert wird.

11. Verfahren nach einem der Ansprüche 1 bis 10, **dadurch gekennzeichnet, dass** im Kühlbecken (10) vorzugsweise in ihrem Winkel ausrichtbare Turbulatoren (26) angeordnet sind, die einen spiralförmigen Fluss des Kühlmediums durch das Kühlbecken erzeugen.

12. Verfahren nach einem der Ansprüche 1 bis 11, **dadurch gekennzeichnet, dass** an der Einlaufseite und/oder an der Auslaufseite jeweils Auffangkammern (14, 13) mit Überlauf (15) vorgesehen sind.

13. Verfahren nach einem der Ansprüche 1 bis 12, **dadurch gekennzeichnet, dass** der Wasserstand im Kühlbecken (10) regelbar ist.

14. Extrusionslinie, insbesondere zur Verwendung in einem Verfahren gemäß einem der Ansprüche 1 bis 13, umfassend einen Extruder und mindestens ein Formgebungswerkzeug, bei der das extrudierte Kunststoffprofil (9) zur Abkühlung nachfolgende Kühleinrichtungen durchläuft, mit wenigstens einem Kühlbecken (10), welches ein Kühlmedium enthält, welches in dem Kühlbecken entgegen der Extrusionsrichtung der Extrusionslinie strömt, dadurch ge-kennzeichnet, dass diese wenigstens einen oberhalb des Kühlbeckens (10) gelegenen Zwischenspeicher (21) umfasst, aus dem unter Ausnutzung des hydrostatischen Drucks der Wassersäule dem Kühlbecken in dessen Endbereich Kühlmedium über eine Zuführleitung (24) zugeführt wird und wenigstens einen Sammelbehälter (28), in dem an der Austrittsseite aus dem Kühlbecken ausströmendes Kühlmedium gesammelt und von diesem aus auf das Niveau des Zwischenspeichers (21) gepumpt wird sowie wenigstens eine im Strömungsweg vor dem Zwischenspeicher angeordnete Thermostateinrichtung (19) oder dergleichen, in der das Kühlmedium auf eine vorgegebene Temperatur gebracht wird, bevor es in den Zwischenspeicher gelangt.
